# EUROPEAN PATENT APPLICATION

(11) **EP 4 726 825 A1**
(43) Date of publication of application: **15.04.2026**
(21) Application number: 25200638.2
(22) Date of filing: 05.09.2025
(51) Int. Cl.: H01M 10/04, H01M 50/107, H01M 50/179, H01M 50/188, H01M 50/528, H01M 50/548, H01M 50/559

(54) **SECONDARY BATTERY**

(30) Priority: 10.10.2024 KR 20240137860
(71) Applicant: SK On Co., Ltd., Seoul 03161 (KR)
(72) Inventor: KWAK, Seung Ho, 03161 Seoul (KR); PARK, Soo Min, 03161 Seoul (KR); PARK, Jae Yun, 03161 Seoul (KR); LEE, Joo Hyuk, 03161 Seoul (KR); CHO, Myeong Shin, 03161 Seoul (KR); PARK, Soo In, 13558 Seongnam-si (KR)
(74) Representative: Stolmár & Partner Patentanwälte PartG mbB

(57) **Abstract**

A secondary battery is disclosed. According to one aspect of the present disclosure, there is provided a secondary battery including: a can including an opening; an electrode assembly including a first hollow and disposed in the can; a cap plate that closes the opening; and an electrode rod extending to pass through the first hollow, wherein the electrode rod includes: a first end portion exposed to the outside of the can and forming an electrode terminal; and a second end portion disposed on an opposite side corresponding to the first end portion.

## Description

### BACKGROUND

### 1. Field of the Invention

Embodiments of the present disclosure relate to a secondary battery.

### 2. Discussion of Related Art

A secondary battery is one of energy storage means which can be charged and discharged through electrochemical reactions. The secondary battery may be used in various fields in which electrical energy is used. For example, secondary batteries are widely utilized in mobile devices such as a cell phone, a notebook, a tablet, and the like, and are being explored for wider utilization in the field of transportation means such as vehicles, aircraft, ships, and the like. Further, demand for secondary batteries is also rapidly increasing in the field of energy storage systems (ESSs) for utilizing surplus electricity.

The secondary batteries may be classified into a pouch type, a prismatic type, a cylindrical type, a coin type, and the like depending on the packaging form. Among the above, demand for the cylindrical secondary battery is rapidly increasing in the field of vehicles in recent years due to advantages such as a standardized size, convenience of mass production, and the like. The cylindrical secondary battery may have a structure in which an electrode assembly called a jelly roll is accommodated in a can along with an electrolyte. Further, the electrode assembly may also be provided by winding a positive electrode and a negative electrode disposed with a separator therebetween in a roll shape.

### SUMMARY OF THE INVENTION

Embodiments of the present disclosure may provide a secondary battery.

Further, some embodiments of the present disclosure may provide a secondary battery which may be packaged in a cylindrical shape.

In addition, some embodiments of the present disclosure may provide a secondary battery with improved cooling performance.

In addition, some embodiments of the present disclosure may provide a secondary battery with improved structural stability.

Some embodiments of the present disclosure may be widely applied in the field of green technologies such as an electric vehicle and a battery charging station as well as solar power generation and wind power generation using batteries. Further, some embodiments of the present disclosure may be used in an eco-friendly electric vehicle, a hybrid vehicle, and the like to prevent climate change by suppressing air pollution and greenhouse gas emissions.

According to one aspect of the present disclosure, there is provided a secondary battery including: a can including an opening; an electrode assembly including a first hollow and disposed in the can; a cap plate that closes the opening; and an electrode rod extending to pass through the first hollow, wherein the electrode rod includes: a first end portion exposed to the outside of the can and forming one electrode terminal; and a second end portion disposed on an opposite side corresponding to the first end portion.

In some embodiments, the can may be provided in a cylindrical shape having a certain diameter and height, and may form another electrode terminal corresponding to the electrode rod.

In some embodiments, the first end portion may be electrically insulated from the can through a first gasket.

In some embodiments, the electrode rod may include an insertion region disposed in the first hollow, the insertion region may be provided to have a first diameter, and the first end portion may be provided to have a second diameter larger than the first diameter.

In some embodiments, the first end portion may be pressed and deformed to have the second diameter after the electrode rod is inserted into the first hollow.

In some embodiments, the second end portion may be electrically insulated from the cap plate through a second gasket.

In some embodiments, the second end portion may be exposed to the outside of the cap plate.

In some embodiments, the electrode rod may include an insertion region disposed in the first hollow, the insertion region may be provided to have a first diameter, and the second end portion may be provided to have a third diameter larger than the first diameter.

In some embodiments, the second end portion may be disposed at a certain interval from an arrangement reference surface.

In some embodiments, the first end portion may be provided to be supported on an outer surface of the can, and the second end portion may be provided to be supported on an outer surface of the cap plate.

In some embodiments, at least a portion of the electrode rod may be formed of an electrically conductive material.

In some embodiments, the electrode rod may include an insertion region disposed in the first hollow, and the insertion region may include an insulating portion that insulates between the electrode rod and the electrode assembly.

In some embodiments, the electrode rod may be formed to transfer heat generated from the electrode assembly and transferred to the first hollow to the first and second end portions.

In some embodiments, the electrode rod may be formed as a solid shaft, flanges may be provided on one or more of the first and second end portions, and each of the flanges may be formed to protrude along an outer circumference of the first end portion or the second end portion, and may be formed to be pressed and deformed in a radial direction after the electrode rod is inserted into the first hollow.

In some embodiments, the electrode rod may be formed as a hollow shaft including a second hollow, and the second hollow may be formed to extend from the first end portion to the second end portion to pass through the electrode rod.

### BRIEF DESCRIPTION OF THE DRAWINGS

The above and other objects, features and advantages of the present disclosure will become more apparent to those of ordinary skill in the art by describing exemplary embodiments thereof in detail with reference to the accompanying drawings, in which:
FIG. 1 is a schematic perspective view of a secondary battery according to one embodiment of the present disclosure;
FIG. 2 is a schematic cross-sectional view of the secondary battery illustrated in FIG. 1;
FIG. 3 is a schematic perspective view of an electrode assembly illustrated in FIG. 2;
FIG. 4 is a schematic cross-sectional view of an electrode rod illustrated in FIG. 3;
FIG. 5 is a schematic cross-sectional view showing another embodiment of the electrode rod illustrated in FIG. 2;
FIG. 6 is a schematic cross-sectional view showing still another embodiment of the electrode rod illustrated in FIG. 2; and
FIGS. 7A and 7B are schematic assembly flowcharts of the secondary battery illustrated in FIG. 2.

### DETAILED DESCRIPTION OF EXEMPLARY EMBODIMENTS

Hereinafter, the present disclosure will be described in detail with reference to the accompanying drawings. However, this is merely exemplary, and the present disclosure is not limited to the exemplified specific embodiments.

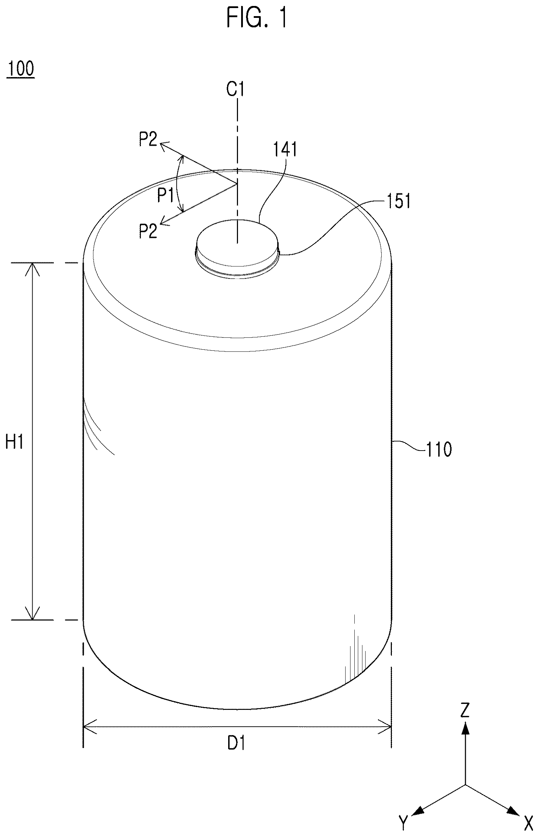

FIG. 1 is a schematic perspective view of a secondary battery according to one embodiment of the present disclosure.

For convenience, hereinafter, an X-axis direction is referred to as a left-right direction, a Y-axis direction is referred to as a front-back direction, and a Z-axis direction is referred to as a vertical direction based on the coordinate axes shown in FIG. 1. In addition, a rotation direction P1 around a central axis C1 shown in FIG. 1 is referred to as a circumferential direction, and a direction P2 toward an outer surface of the secondary battery from the central axis C1 is referred to as a radial direction.

Referring to FIG. 1, in some embodiments, a secondary battery 100 may be provided in a cylindrical shape having a certain diameter D1 and height H1. For example, the secondary battery 100 may have a diameter of 46 mm and a height of 80 mm. In some cases, the secondary battery 100 having such a form factor may be referred to as a '4680 battery.' In another example, the secondary battery 100 may have a diameter of 46 mm and a height of 80 mm, a diameter of 46 mm and a height of 95 mm, or a diameter of 46 mm and a height of 110 mm. In some cases, the secondary battery 100 having such a form factor may be referred to as a '46xx battery.' In the '46xx', 'xx' may be described as a height of the corresponding form factor. In still another example, the secondary battery 100 may have a diameter of 48 mm and a height of 75 mm, a diameter of 48 mm and a height of 80 mm, or a diameter of 48 mm and a height of 110 mm. In some cases, the secondary battery 100 having such a form factor may be referred to as a '48xx battery.' In the '48xx', 'xx' may be described as a height of the corresponding form factor. However, in the present disclosure, the diameter D1 and height H1 of the secondary battery 100 may be variously changed and are not necessarily limited to the above-described examples.

Meanwhile, although a cylindrical secondary battery 100 is exemplified in the present description, the form factors of the secondary battery 100 according to the embodiments of the present disclosure are not necessarily limited to above-described examples. The secondary battery 100 according to the embodiments of the present disclosure may be implemented or applied in a coin shape, a prismatic shape, a pouch shape, other non-standardized shapes, or the like within the scope of the technical spirit to be described below.

Meanwhile, in the illustrated embodiment, the cylindrical secondary battery 100 may have the central axis C1. The central axis C1 may be provided as an axis in the vertical direction passing through the center of the secondary battery 100. As mentioned above, in the description, the circumferential and radial directions are defined and referred based on the central axis C1.

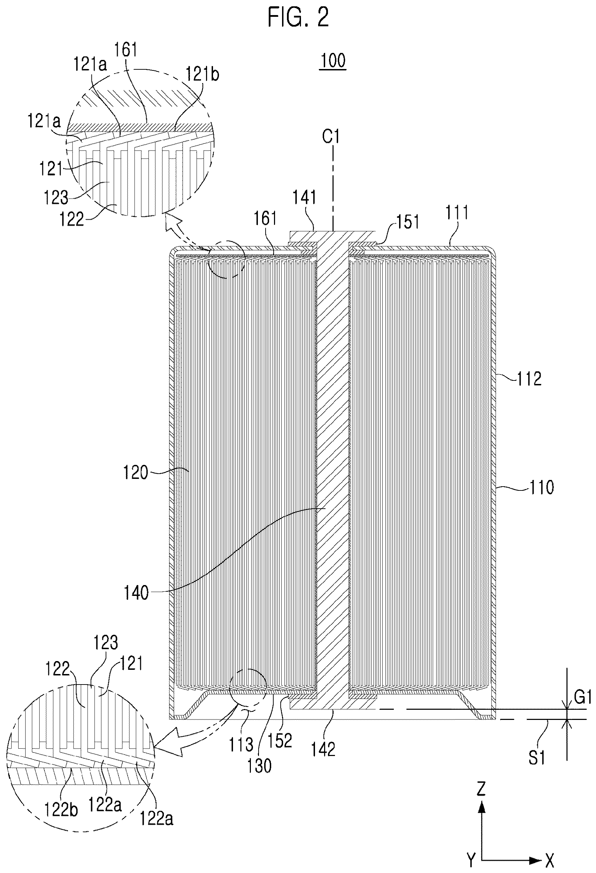

FIG. 2 is a schematic cross-sectional view of the secondary battery illustrated in FIG. 1.

Referring to FIG. 2, in some embodiments, the secondary battery 100 may include a can 110 including an opening 113; an electrode assembly 120 including a first hollow 124 and disposed in the can 110; a cap plate 130 which closes the opening 113; and an electrode rod 140 extending to pass through the first hollow 124. Here, the electrode rod 140 may include a first end portion 141 exposed to the outside of the can 110 and forming one electrode terminal, and a second end portion 142 disposed on an opposite side corresponding to the first end portion 141.

Specifically, in some embodiments, the secondary battery 100 may include the can 110. The can 110 may form the overall exterior of the secondary battery 100. Further, the can 110 may provide an inner space for disposing the electrode assembly 120.

In some embodiments, the can 110 may be provided in a cylindrical shape having a certain diameter D1 and height H1. Further, the can 110 may include a first surface 111 and a second surface 112. The first surface 111 may be provided at one end portion of the can 110 along a direction of the central axis C1, and the second surface 112 may be formed to extend in the circumferential direction while surrounding the inside of the can 110. In other words, based on the illustrated example, the first surface 111 corresponds to an upper surface 111 of the can 110, and the second surface 112 corresponds to a side surface 112 of the can 110. For convenience, hereinafter, the first surface 111 will be referred to as the upper surface 111 and the second surface 112 will be referred to as the side surface 112. Meanwhile, a lower end of the can 110 may be opened to provide the opening 113, and the opening 113 may be closed through the cap plate 130.

Meanwhile, in some embodiments, the can 110 may be electrically connected to the electrode assembly 120 to form another electrode terminal corresponding to the electrode rod 140. For example, in the illustrated embodiment, the electrode rod 140 may function as a positive electrode terminal and the can 110 may function as a negative electrode terminal.

Meanwhile, in some embodiments, the secondary battery 100 may include the electrode assembly 120. The electrode assembly 120 may be disposed in the can 110. In some embodiments, the electrode assembly 120 may include a first electrode 121 and a second electrode 122 disposed with a separator 123 therebetween. The first electrode 121 may be a positive electrode or a negative electrode, and the second electrode 122 may be a negative electrode or a positive electrode corresponding to the first electrode 121. For convenience, in the present description, it is assumed that the first electrode 121 is the positive electrode and the second electrode 122 is the negative electrode.

In some embodiments, the first electrode 121 may include a positive electrode current collector and a positive electrode mixture layer. For example, the positive electrode current collector may include aluminum, stainless steel, nickel, titanium, an alloy thereof, or the like. The positive electrode mixture layer may be provided on at least one surface of the positive electrode current collector. The positive electrode mixture layer may include a positive electrode active material, and the positive electrode active material may include a compound capable of reversibly intercalating and deintercalating lithium ions. For example, the positive electrode active material may include a lithium-nickel metal oxide, and in some cases, the lithium-nickel metal oxide may further include cobalt, manganese, aluminum, or the like.

In some embodiments, the second electrode 122 may include a negative electrode current collector and a negative electrode mixture layer. For example, the negative electrode current collector may include copper, stainless steel, nickel, titanium, an alloy thereof, or the like. Meanwhile, the negative electrode mixture layer may be provided on at least one surface of the negative electrode current collector. The negative electrode mixture layer may include a negative electrode active material, and the negative electrode active material may include a compound capable of reversibly intercalating and deintercalating lithium ions. For example, the negative electrode active material may include a carbon-based material such as crystalline carbon, amorphous carbon, a carbon composite, carbon fibers, or the like. Alternatively, the negative electrode active material may include lithium metal, a lithium alloy, a silicon-containing material, a tin-containing material, or the like.

The separator 123 may be provided between the first electrode 121 and the second electrode 122. The separator 123 may be provided to limit an electrical short-circuit between the first and second electrodes 121 and 122 and allow ions to flow. In some embodiments, the separator 123 may include a porous polymer film, a porous nonwoven fabric, or the like. For example, the porous polymer film may include a polyolefin polymer such as an ethylene polymer, a propylene polymer, an ethylene/butene copolymer, an ethylene/hexene copolymer, an ethylene/methacrylate copolymer, or the like. Further, the porous nonwoven fabric may include high-melting-point glass fiber, polyethylene terephthalate fiber, or the like.

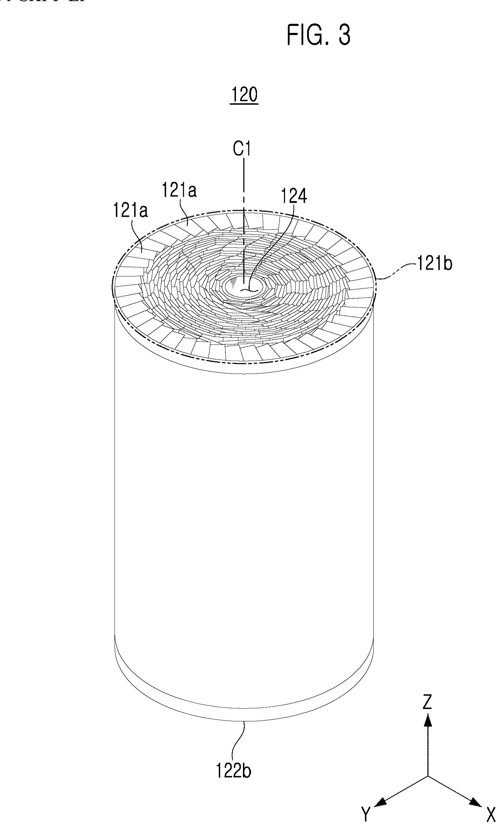

FIG. 3 is a schematic perspective view of the electrode assembly illustrated in FIG. 2.

Referring to FIG. 3, in some embodiments, the electrode assembly 120 may be provided in a cylindrical roll shape in which the first and second electrodes 121 and 122 and the separator 123 are wound around the central axis C1. The roll-shaped electrode assembly 120 may be referred to as a jelly roll or the like in the art.

In some embodiments, the electrode assembly 120 may include a first electrode tab 121a. The first electrode tab 121a may be provided on one end portion of the positive electrode current collector where the positive electrode mixture layer is omitted. In the illustrated embodiment, the first electrode tab 121a is provided on an upper end portion of the first electrode 121. In some embodiments, a plurality of first electrode tabs 121a may be provided. The plurality of first electrode tabs 121a may be disposed on the upper end portion of the first electrode 121 along a direction in which the first electrode 121 is wound. Further, the plurality of first electrode tabs 121a may be bent toward the central axis C1. The plurality of bent first electrode tabs 121a may form a first joining surface 121b on an upper end of the electrode assembly 120. The first joining surface 121b may be provided as an approximate surface formed by the plurality of bent first electrode tabs 121a.

Meanwhile, in some embodiments, the first hollow 124 may be provided in the center of the electrode assembly 120. The first hollow 124 may be formed to extend to vertically pass through the center of the electrode assembly 120. Further, the first hollow 124 may be disposed to correspond to the central axis C1 in the can 110.

Referring to FIG. 2 again, in some embodiments, the electrode assembly 120 may include a second electrode tab 122a. The second electrode tab 122a may be disposed on one end portion of the negative electrode current collector where the negative electrode mixture layer is omitted. In the illustrated embodiment, the second electrode tab 122a is provided on a lower end portion of the second electrode 122. Similar to the above-described first electrode tab 121a, in some embodiments, a plurality of second electrode tabs 122a may be provided. Further, the plurality of second electrode tabs 122a may be bent toward the central axis C1 to form a second joining surface 122b at a lower end of the electrode assembly 120.

Meanwhile, in some embodiments, the first electrode tab 121a may be electrically connected to the electrode rod 140. Accordingly, a portion of the electrode rod 140 may function as one electrode terminal. For example, in the illustrated embodiment, the first electrode 121 is exemplified as a positive electrode, and the electrode rod 140 may be electrically connected to the first electrode tab 121a to function as a positive electrode terminal. In some embodiments, the first electrode tab 121a may be electrically connected to the electrode rod 140 through a current collector plate 161. The current collector plate 161 may be joined to the first joining surface 121b through welding or the like and electrically connected to the first electrode tab 121a. Further, the current collector plate 161 may be joined to the electrode rod 140 through welding or the like and electrically connected to the electrode rod 140.

Meanwhile, in some embodiments, the second electrode tab 122a may be electrically connected to the can 110. Accordingly, a portion of the can 110 may function as another electrode terminal corresponding to the above-described electrode rod 140. For example, in the illustrated embodiments, the second electrode 122 is exemplified as a negative electrode, and the can 110 may be electrically connected to the second electrode tab 122a to function as a negative electrode terminal. In some embodiments, the second electrode tab 122a may be electrically connected to the can 110 through the cap plate 130. The cap plate 130 may be joined to the second joining surface 122b through welding or the like and electrically connected to the second electrode tab 122a. Further, the cap plate 130 may be joined to the can 110 through welding or the like and electrically connected to the can 110.

Although not shown, in some other embodiments, the second electrode tab 122a may be electrically connected to the can 110 through a current collector plate. In this case, the current collector plate may be joined between the second electrode tab 122a and the can 110 through welding or the like. Further, the cap plate 130 may be provided to be electrically insulated from the can 110.

Meanwhile, in some embodiments, the secondary battery 100 may include the cap plate 130. The cap plate 130 may be provided to close the opening 113 at the lower end of the can 110. Accordingly, the inside of the can 110 may be appropriately sealed by the electrode rod 140 on the upper side (that is, the first end portion 141) and the cap plate 130 on the lower side in a state in which the electrode assembly 120 is accommodated in the can 110.

Meanwhile, in some embodiments, the secondary battery 100 may include the electrode rod 140. The electrode rod 140 may be formed to extend to pass through the first hollow 124 provided in the electrode assembly 120. That is, the electrode rod 140 may be formed to extend along a longitudinal direction, and may be formed to vertically pass through the first hollow 124. The electrode rod 140 may include the first end portion 141 and the second end portion 142. The first end portion 141 refers to one end portion of the electrode rod 140 in the longitudinal direction, and the second end portion 142 refers to an opposite end portion corresponding to the first end portion 141. In the illustrated embodiment, the first end portion 141 is disposed at an upper end of the electrode rod 140, and the second end portion 142 is disposed at a lower end of the electrode rod 140.

In some embodiments, the first end portion 141 may be provided to be exposed to the outside of the can 110. Further, the exposed first end portion 141 may form one electrode terminal. For example, in the illustrated embodiment, the electrode rod 140 is electrically connected to the first electrode tab 121a, and first end portion 141 is exposed to the upper surface 111 of can 110. Accordingly, the exposed first end portion 141 forms a positive electrode terminal corresponding to the first electrode tab 121a.

In some embodiments, the first end portion 141 may be electrically insulated from the can 110 by a first gasket 151. The first gasket 151 may be provided between an upper end region of the electrode rod 140 where the first end portion 141 is disposed and the upper surface 111 of the can 110 to electrically insulate between the first end portion 141 and the can 110. Accordingly, the electrode rod 140 may be electrically insulated from the can 110.

Meanwhile, in some embodiments, the second end portion 142 may be provided to be exposed to the outside of the cap plate 130. The exposed second end portion 142 may function as a support structure which supports the cap plate 130. In the illustrated embodiment, the second end portion 142 is exposed to a bottom surface of the cap plate 130 and is provided to support the bottom surface of the cap plate 130 between the first end portion 141 and the second end portion 142. Accordingly, a load or external force which acts on the cap plate 130 may be distributed through the second end portion 142 and the first end portion 141 to the upper surface 111 of the can 110.

Similar to the above-described first end portion 141, in some embodiments, the second end portion 142 may be electrically insulated from the cap plate 130 by a second gasket 152. The second gasket 152 may be provided between a lower end region of the electrode rod 140 where the second end portion 142 is disposed and the cap plate 130 to electrically insulate between the second end portion 142 and the cap plate 130. Accordingly, the electrode rod 140 may be electrically insulated from the cap plate 130 or the can 110.

Meanwhile, in some embodiments, the second end portion 142 may be disposed at a certain interval G1 from an arrangement reference surface S1. Here, the arrangement reference surface S1 may be defined as a plane corresponding to the lowermost end of the secondary battery 100. That is, the arrangement reference surface S1 may be defined as a plane corresponding to a support surface on which the secondary battery 100 is disposed. In the illustrated embodiment, the arrangement reference surface S1 is provided as an XY-plane corresponding to the lower end of the can 110 and the lower end of the cap plate 130. The second end portion 142 may be spaced apart from the arrangement reference surface S1 at a certain interval G1 to be electrically insulated from the arrangement reference surface S1 and the support surface.

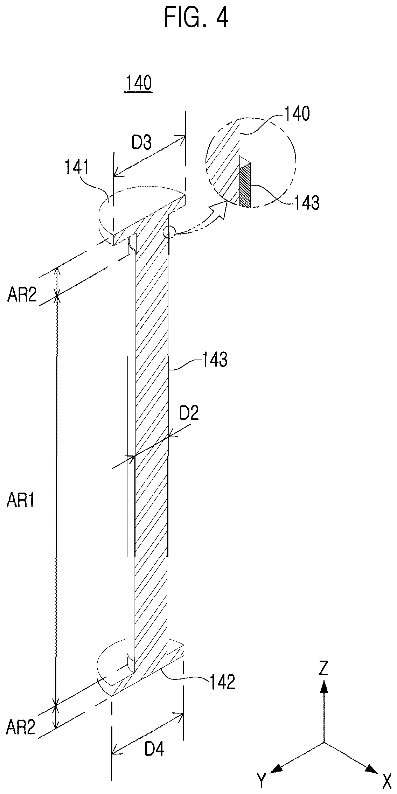

FIG. 4 is a schematic cross-sectional view of the electrode rod illustrated in FIG. 3.

Referring to FIG. 4, in some embodiments, the electrode rod 140 may include an insertion region AR1 and an exposed region AR2 along the longitudinal direction. The insertion region AR1 may be disposed in the first hollow 124. That is, the insertion region AR1 may be provided as a partial region in the longitudinal direction of the electrode rod 140 disposed in the first hollow 124. In the illustrated embodiment, the insertion region AR1 is provided as most of the remaining region of the electrode rod 140 excluding some regions at both ends of the electrode rod 140 (the exposed region AR2). The exposed region AR2 may be disposed to be exposed to the outside of the first hollow 124. That is, the exposed region AR2 may be provided as the remaining region in the longitudinal direction of the electrode rod 140 disposed outside the first hollow 124. The exposed region AR2 may be provided at each of an upper end and a lower end of the electrode rod 140.

In some embodiments, the insertion region AR1 may have a first diameter D2. The first diameter D2 may correspond to an inner diameter of the first hollow 124, or may be formed to be a certain amount smaller than the first hollow 124. Accordingly, the electrode rod 140 may be appropriately inserted into and fastened to the first hollow 124. In contrast, in some embodiments, the first end portion 141 may have a second diameter D3 that is a certain amount larger than the first diameter D2. That is, the first end portion 141 may have a diameter D3 that is a certain amount larger than the insertion region AR. Accordingly, the first end portion 141 may be appropriately supported on the upper surface 111 of the can 110. Further, a connection space for connecting a bus bar or the like to the first end portion 141 may be appropriately secured.

In some embodiments, the first end portion 141 may be pressed and deformed to have the second diameter D3 after the electrode rod 140 is inserted into and fastened to the first hollow 124. Specifically, the first end portion 141 may be provided to have the first diameter D2 corresponding to the insertion region AR1 in an initial state. Further, the electrode rod 140 may also be inserted into and fastened to the first hollow 124 in the above-described initial state. Thereafter, the first end portion 141 may be pressed and deformed. For example, the first end portion 141 may be caulked. Accordingly, the first end portion 141 may be deformed in the radial direction to have the second diameter D3.

Similar to the above-described first end portion 141, in some embodiments, the second end portion 142 may have a third diameter D4 that is a certain amount larger than the first diameter D2. The third diameter D4 may be formed the same as or different from the above-described second diameter D3. The illustrated embodiment exemplifies that the second and third diameters D3 and D4 are formed the same. Depending on the third diameter D4, the second end portion 142 may appropriately support the bottom surface of the cap plate 130. That is, the cap plate 130 may be supported on the second end portion 142, and thus may be limited from being separated from the electrode rod 140.

As described above, the electrode rod 140 may be supported between the can 110 and the cap plate 130 by the first and second end portions 141 and 142. That is, the first end portion 141 may be provided to be supported from a lower side by the upper surface 111 of the can 110, and the second end portion 142 may be provided to be supported on the bottom surface of the cap plate 130. Accordingly, configurations inside the can 110 such as the electrode assembly 120 and the like may be disposed with a more stable support structure. Further, an external force concentrated at a junction of the can 110 and the cap plate 130 or the like may be distributed to the upper surface 111 of the can 110 or the like.

In some embodiments, the above-described support structure of the electrode rod 140 may function to simplify the structure of the can 110. For example, the above-described support structure of the electrode rod 140 may replace a beading portion conventionally provided on the side surface 112 of the can 110 to assist in supporting the electrode assembly 120. For reference, the beading portion refers to a configuration provided in the form of a groove concavely recessed in a lower end of the side surface 112 of the can 110 to assist in fixing and supporting the electrode assembly 120 therein. In some embodiments, the support structure of the electrode rod 140 may replace the function of the above-described beading portion, and the side surface 112 of the can 110 may be provided with a smoothly curved surface in which the above-described beading portion is omitted.

Meanwhile, in some embodiments, at least a portion of the electrode rod 140 may be provided with a material having electrical conductivity. For example, the electrode rod 140 may be entirely formed of a metal material such as steel, aluminum, or the like. Accordingly, the first end portion 141 of the electrode rod 140 may appropriately function as an electrode terminal.

Further, in some embodiments, at least a portion of the electrode rod 140 may be provided with a material having thermal conductivity. For example, the electrode rod 140 may be entirely formed of a metal material such as steel, aluminum, or the like. The electrode rod 140 may function to discharge heat generated from the electrode assembly 120 or the like. Specifically, the heat generated from the electrode assembly 120 or the like may be transferred from the inside of the can 110 to the first hollow 124, and the heat transferred to the first hollow 124 may move along the electrode rod 140 and may be transferred to the first and second end portions 141 and 142 disposed outside the can 110. Accordingly, the heat generated from the inside of the can 110 may be effectively discharged to the outside of the can 110. Further, the electrode rod 140 provided with a thermally conductive material such as metal or the like may further promote this heat dissipation operation.

Meanwhile, in some embodiments, the electrode rod 140 may include an insulating portion 143. The insulating portion 143 may be provided to insulate the electrode rod 140 from the electrode assembly 120. Specifically, as described above, the electrode rod 140 may include the insertion region AR1 disposed in the first hollow 124, and the insulating portion 143 may be provided in a region including the insertion region AR1. The insulating portion 143 may be implemented through various means. For example, the insulating portion 143 may be implemented in the form of an insulating coating applied to an outer surface of the insertion region AR1. Alternatively, the insulating portion 143 may be implemented in the form of an insulating sleeve fastened to the outer surface of the insertion region AR1. The insulating sleeve may be provided in the form of a tube or the like and may be fastened to the outer surface of the insertion region AR1 by adhesion, press-fitting, or the like. In some embodiments, the insulating sleeve may be provided in the form of a heat-shrinkable tube or the like that comes into close contact with the outer surface of the insertion region AR1 through a heating means.

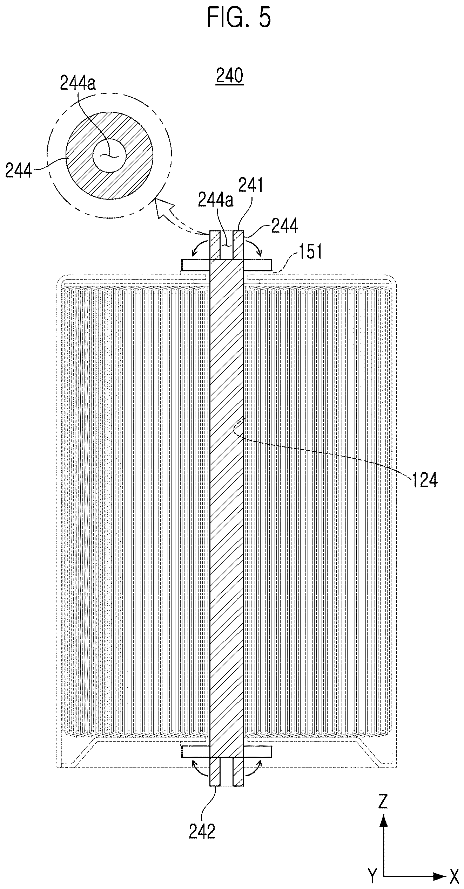

FIG. 5 is a schematic cross-sectional view showing another embodiment of the electrode rod illustrated in FIG. 2.

For convenience, the following description will focus on the differences from the above-described embodiment. Referring to FIG. 5, in some embodiments, flanges 244 may be provided at end portions of an electrode rod 240. The flanges 244 may be provided at one or more of first and second end portions 241 and 242. In the illustrated embodiment, the flanges 244 are provided at both the first and second end portions 241 and 242.

The flanges 244 may be provided in the same or similar manner at the first and second end portions 241 and 242. Describing the first end portion 241 as an example, each of the flanges 244 may be formed to protrude upward along an outer circumference of first end portion 241. The flange 244 may be provided in the form of a circular sleeve surrounding a central space 244a. Further, the flange 244 may be provided in the same or similar manner at the second end portion 242. Meanwhile, the electrode rod 240 may be provided in the form of a solid shaft whose inside is filled in the remaining region excluding both end regions.

In some embodiments, the above-described flange 244 may be pressed and deformed in the radial direction. Specifically, the flange 244 may be prepared in a state of being formed to protrude along the outer circumference of the first end portion 241, and the electrode rod 240 may be inserted into and fastened to the first hollow 124 in this state. Further, when the electrode rod 240 is appropriately inserted and disposed, the flange 244 may be pressed by a certain processing means. For example, an upper end of the flange 244 may be pressed by a press, or the flange 244 may be pressed by a processing tool disposed in the space 244a. Accordingly, the flange 244 may be deformed in the radial direction and may come into close contact with the first gasket 151. Further, the first end portion 241 may form an electrode terminal in the form of a flat metal piece as in the above-described embodiment. Although the description is omitted, the above operation may be similarly implemented for the second end portion 242.

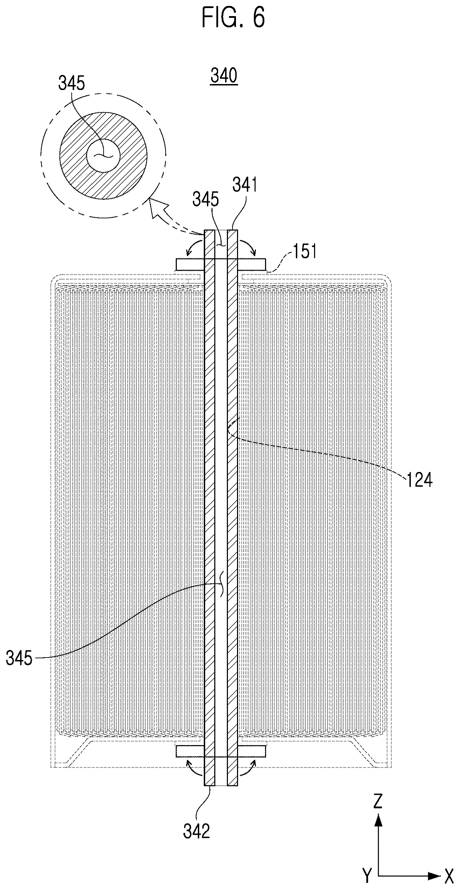

FIG. 6 is a schematic cross-sectional view showing still another embodiment of the electrode rod illustrated in FIG. 2.

Referring to FIG. 6, in some embodiments, an electrode rod 340 may include a second hollow 345 therein in the form of a hollow shaft. The second hollow 345 may extend from a first end portion 341 to a second end portion 342 of the electrode rod 340 along a longitudinal direction of the electrode rod 340. In the electrode rod 340, an upper region adjacent to the first end portion 341 may function similarly to the flange 244 of the above-described embodiment. That is, an upper region where the second hollow 345 is formed therein may be pressed and deformed in the radial direction to form an electrode terminal similar to the above-described embodiment. Similarly, a lower region adjacent to the second end portion 342 may also be pressed and deformed in the radial direction.

In the above-described electrode rod 340, the second hollow 345 may be provided to vertically pass through the electrode rod 340. In some embodiments, the second hollow 345 may be filled with a filler having thermal conductivity or electrical conductivity. Alternatively, although not shown, in some other embodiments, a pin-shaped fixing member may be inserted into and fastened to the second hollow 345. The fixing member may be provided from a base plate or the like on which the secondary battery is disposed. In this case, heat transferred to the second hollow 345 may be transferred to the base plate or the like through the fixing member. Further, a plurality of fixing members may be disposed in advance on the base plate or the like and may function to guide the arrangement of the secondary battery and assist in fixing the secondary battery.

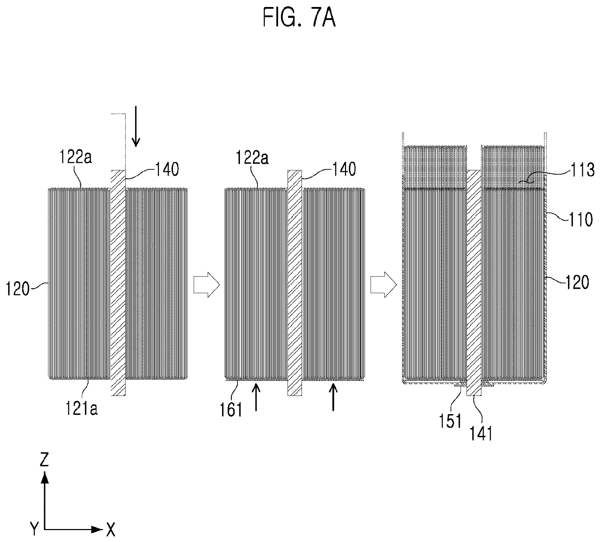

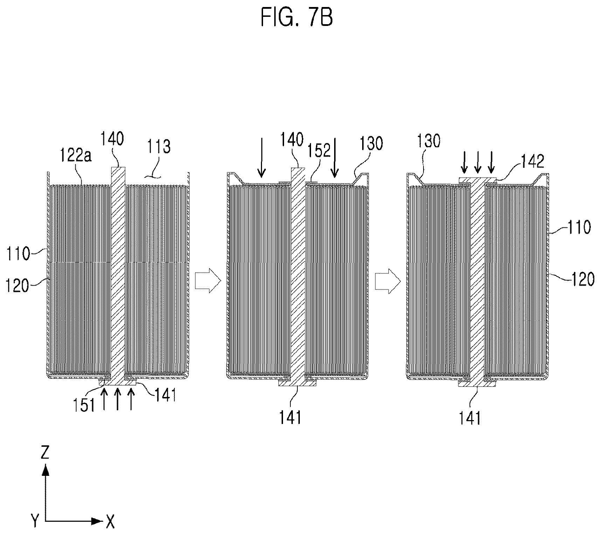

FIGS. 7A and 7B are schematic assembly flowcharts of the secondary battery illustrated in FIG. 2.

Hereinafter, the schematic assembly method will be described by taking the secondary battery 100 illustrated in FIG. 2 as an example. The assembly method to be described below may be applied to the secondary batteries illustrated in FIGS. 5 and 6 in the same or similar manner. However, in the embodiments of the present disclosure, the secondary battery assembly method is not necessarily limited to the assembly method to be described below. In some embodiments, the secondary battery may be manufactured by an assembly method different from that described below.

Referring to FIG. 7A, the electrode assembly 120 may be prepared and the electrode rod 140 may be inserted into the first hollow. For convenience of description, it should be noted that FIGS. 7A and 7B illustrate the above-described electrode assembly 120 and the like upside down. That is, in FIG. 7A, the first electrode tab 121a is disposed on the lower side of the electrode assembly 120, and the second electrode tab 122a is disposed on the upper side of the electrode assembly 120. The electrode rod 140 may be fastened to the electrode assembly 120 so that the insertion region is disposed in the first hollow.

Subsequently, the current collector plate 161 may be fastened. The current collector plate 161 may be joined to the first electrode tab 121a through welding or the like. Further, the current collector plate 161 may be joined to the electrode rod 140 through welding or the like. In some cases, the current collector plate 161 may be fastened to the electrode assembly 120 in advance before inserting the electrode rod 140.

Subsequently, an assembly including the electrode assembly 120, the electrode rod 140, and the current collector plate 161 may be inserted into the can 110. The assembly may be inserted into the can 110 through the opening 113. When the assembly is inserted, the first end portion 141 of the electrode rod 140 may be exposed through the upper surface (the lower surface in the drawing) of the can 110. Further, the first gasket 151 may be fastened between the electrode rod 140 and the can 110.

Referring to FIG. 7B, subsequently, the first end portion 141 may be pressed and deformed. The first end portion 141 may be pressed and deformed to a certain degree in the radial direction to form a positive electrode terminal on the upper surface (the lower surface in the drawing) of the can 110. Further, the first gasket 151 may be tightly pressed between the first end portion 141 and the upper surface (the lower surface in the drawing) of the can 110. In addition, an electrolyte or the like may be injected into the can 110 through the opening 113.

Subsequently, the cap plate 130 may be fastened to the lower end (the upper end in the drawing) of the can 110 to close the opening 113. Further, the cap plate 130 may be joined to the second electrode tab 122a. In some cases, the cap plate 130 may be joined to the second electrode tab 122a through a heat source provided from the outer surface (the upper surface of the cap plate 130 in the drawing) in a state of being disposed on the second electrode tab 122a. Further, the second gasket 152 may be fastened between the electrode rod 140 and the cap plate 130.

Subsequently, the second end portion 142 may be pressed and deformed. Similar to the above-described first end portion 141, the second end portion 142 may be pressed and deformed to a certain degree in the radial direction, and may be press-fitted and fixed to the outer surface of the cap plate 130. Further, the second gasket 152 may be tightly pressed between the second end portion 142 and the cap plate 130.

As described above, the embodiments of the present disclosure may provide a secondary battery. In some embodiments of the present disclosure, the electrode assembly may be accommodated in a cylindrical can to be packaged in a cylindrical shape. Further, in some embodiments of the present disclosure, the support structure of the electrode assembly or the like may be improved and suitably utilized in a relatively large-sized cylindrical secondary battery.

In addition, in some embodiments of the present disclosure, the secondary battery may include the electrode rod passing through the electrode assembly, and a portion of the electrode rod may be exposed to the outside of the can. The electrode rod may function as one electrode terminal and also function as a heat dissipation means which dissipates heat inside the can to the outside. Accordingly, the cooling performance of the secondary battery may be improved.

Further, in the embodiments of the present disclosure, the electrode rod may function as a support structure which supports the cap plate or the electrode assembly. Accordingly, the structural stability of the secondary battery may be improved. Further, in some embodiments, the electrode rod may allow the beading portion formed in a conventional can to be removed. Accordingly, the manufacturing convenience of the secondary battery may be improved.

Embodiments of the present disclosure can provide a secondary battery.

Some embodiments of the present disclosure can provide a secondary battery packaged in a cylindrical shape.

Further, in some embodiments of the present disclosure, cooling performance can be improved by appropriately dissipating heat in a can to the outside.

In addition, in some embodiments of the present disclosure, an appropriate support structure for an electrode assembly can be provided to improve the structural stability of a secondary battery.

Some of the aspects of the present disclosure are as follows:
Aspect 1: A secondary battery (100) comprising: a can (110) including an opening (113); an electrode assembly (120) including a first hollow (124) and disposed in the can (110); a cap plate (130) that closes the opening (113); and an electrode rod (140, 240, 340) extending to pass through the first hollow (124), wherein the electrode rod (140, 240, 340) includes: a first end portion (141, 241, 341) exposed to the outside of the can (110) and forming one electrode terminal; and a second end portion (142, 242, 342) disposed on an opposite side corresponding to the first end portion (141, 241, 341).
Aspect 2: The secondary battery (100) of aspect 1, wherein the can (110) is provided in a cylindrical shape having a certain diameter and height, and forms another electrode terminal corresponding to the electrode rod (140, 240, 340).
Aspect 3: The secondary battery (100) according to any one of the preceding aspects, wherein the first end portion (141, 241, 341) is electrically insulated from the can (110) through a first gasket (151).
Aspect 4: The secondary battery (100) according to any one of the preceding aspects, wherein the electrode rod (140, 240, 340) includes an insertion region (AR1) disposed in the first hollow (124), the insertion region (AR1) is provided to have a first diameter (D2), and the first end portion (141, 241, 341) is provided to have a second diameter (D3) larger than the first diameter (D2).
Aspect 5: The secondary battery (100) according to any one of the preceding aspects, wherein the first end portion (141, 241, 341) is pressed and deformed to have the second diameter (D3) after the electrode rod (140, 240, 340) is inserted into the first hollow (124).
Aspect 6: The secondary battery (100) according to any one of the preceding aspects, wherein the second end portion (142, 242, 342) is electrically insulated from the cap plate (130) through a second gasket (152).
Aspect 7: The secondary battery (100) according to any one of the preceding aspects, wherein the second end portion (142, 242, 342) is exposed to the outside of the cap plate (130).
Aspect 8: The secondary battery (100) according to any one of the preceding aspects, wherein the electrode rod (140, 240, 340) includes an insertion region (AR1) disposed in the first hollow (124), the insertion region (AR1) is provided to have a first diameter (D2), and the second end portion (142, 242, 342) is provided to have a third diameter (D4) larger than the first diameter (D2).
Aspect 9: The secondary battery (100) according to any one of the preceding aspects, wherein the second end portion (142, 242, 342) is disposed at a certain interval from an arrangement reference surface (S1).
Aspect 10: The secondary battery (100) according to any one of the preceding aspects, wherein the first end portion (141, 241, 341) is provided to be supported on an outer surface of the can (110), and the second end portion (142, 242, 342) is provided to be supported on an outer surface of the cap plate (130).
Aspect 11: The secondary battery (100) according to any one of the preceding aspects, wherein at least a portion of the electrode rod (140, 240, 340) is formed of an electrically conductive material.
Aspect 12: The secondary battery (100) according to any one of the preceding aspects, wherein the electrode rod (140, 240, 340) includes an insertion region (AR1) disposed in the first hollow (124), and the insertion region (AR1) includes an insulating portion (143) that insulates between the electrode rod (140, 240, 340) and the electrode assembly (120).
Aspect 13: The secondary battery (100) according to any one of the preceding aspects, wherein the electrode rod (140, 240, 340) is formed to transfer heat generated from the electrode assembly (120) and transferred to the first hollow (124) to the first and second end portions (141, 241, 341, 142, 242, 342).
Aspect 14: The secondary battery (100) according to any one of the preceding aspects, wherein the electrode rod (140, 240) is formed as a solid shaft, flanges (244) are provided on one or more of the first and second end portions (141, 241, 142, 242), and each of the flanges (244) is formed to protrude along an outer circumference of the first end portion (141, 241) or the second end portion (142, 242), and is formed to be pressed and deformed in a radial direction after the electrode rod (140, 240) is inserted into the first hollow (124).
Aspect 15: The secondary battery (100) according to any one preceding aspects, wherein the electrode rod (340) is formed as a hollow shaft including a second hollow (345), and the second hollow (345) is formed to extend from the first end portion (341) to the second end portion (342) to pass through the electrode rod (340).

The above description is only an example to which the principle of the present disclosure is applied, and other configurations may be further included without departing from the scope of the present disclosure.

## Claims

1. A secondary battery (100) comprising:
a can (110) including an opening (113);
an electrode assembly (120) including a first hollow (124) and disposed in the can (110);
a cap plate (130) that closes the opening (113); and
an electrode rod (140, 240, 340) extending to pass through the first hollow (124),
wherein the electrode rod (140, 240, 340) includes:
a first end portion (141, 241, 341) exposed to the outside of the can (110) and forming one electrode terminal; and
a second end portion (142, 242, 342) disposed on an opposite side corresponding to the first end portion (141, 241, 341).

2. The secondary battery (100) of claim 1, wherein the can (110) is provided in a cylindrical shape having a certain diameter and height, and forms another electrode terminal corresponding to the electrode rod (140, 240, 340).

3. The secondary battery (100) according to any one of the preceding claims, wherein the first end portion (141, 241, 341) is electrically insulated from the can (110) through a first gasket (151).

4. The secondary battery (100) according to any one of the preceding claims, wherein the electrode rod (140, 240, 340) includes an insertion region (AR1) disposed in the first hollow (124),
the insertion region (AR1) is provided to have a first diameter (D2), and
the first end portion (141, 241, 341) is provided to have a second diameter (D3) larger than the first diameter (D2).

5. The secondary battery (100) according to any one of the preceding claims, wherein the first end portion (141, 241, 341) is pressed and deformed to have the second diameter (D3) after the electrode rod (140, 240, 340) is inserted into the first hollow (124).

6. The secondary battery (100) according to any one of the preceding claims, wherein the second end portion (142, 242, 342) is electrically insulated from the cap plate (130) through a second gasket (152).

7. The secondary battery (100) according to any one of the preceding claims, wherein the second end portion (142, 242, 342) is exposed to the outside of the cap plate (130).

8. The secondary battery (100) according to any one of the preceding claims, wherein the electrode rod (140, 240, 340) includes an insertion region (AR1) disposed in the first hollow (124),
the insertion region (AR1) is provided to have a first diameter (D2), and
the second end portion (142, 242, 342) is provided to have a third diameter (D4) larger than the first diameter (D2).

9. The secondary battery (100) according to any one of the preceding claims, wherein the second end portion (142, 242, 342) is disposed at a certain interval from an arrangement reference surface (S1).

10. The secondary battery (100) according to any one of the preceding claims, wherein the first end portion (141, 241, 341) is provided to be supported on an outer surface of the can (110), and
the second end portion (142, 242, 342) is provided to be supported on an outer surface of the cap plate (130).

11. The secondary battery (100) according to any one of the preceding claims, wherein at least a portion of the electrode rod (140, 240, 340) is formed of an electrically conductive material.

12. The secondary battery (100) according to any one of the preceding claims, wherein the electrode rod (140, 240, 340) includes an insertion region (AR1) disposed in the first hollow (124), and
the insertion region (AR1) includes an insulating portion (143) that insulates between the electrode rod (140, 240, 340) and the electrode assembly (120).

13. The secondary battery (100) according to any one of the preceding claims, wherein the electrode rod (140, 240, 340) is formed to transfer heat generated from the electrode assembly (120) and transferred to the first hollow (124) to the first and second end portions (141, 241, 341, 142, 242, 342).

14. The secondary battery (100) according to any one of the preceding claims, wherein the electrode rod (140, 240) is formed as a solid shaft,
flanges (244) are provided on one or more of the first and second end portions (141, 241, 142, 242), and
each of the flanges (244) is formed to protrude along an outer circumference of the first end portion (141, 241) or the second end portion (142, 242), and is formed to be pressed and deformed in a radial direction after the electrode rod (140, 240) is inserted into the first hollow (124).

15. The secondary battery (100) according to any one of claim 1 to 13, wherein the electrode rod (340) is formed as a hollow shaft including a second hollow (345), and
the second hollow (345) is formed to extend from the first end portion (341) to the second end portion (342) to pass through the electrode rod (340).
